(19) Europäisches Patentamt
European Patent Office
Office européen des brevets

(11) EP 4 703 064 A1

(12) EUROPEAN PATENT APPLICATION
published in accordance with Art. 153(4) EPC

(43) Date of publication:
04.03.2026 Bulletin 2026/10

(51) International Patent Classification (IPC):
B22F 1/052 (2022.01)    B22F 1/00 (2022.01)
B22F 1/06 (2022.01)    B22F 1/054 (2022.01)
B22F 1/107 (2022.01)    B22F 3/14 (2006.01)
B22F 7/04 (2006.01)    H01B 1/22 (2006.01)

(21) Application number: 24796943.9

(52) Cooperative Patent Classification (CPC):
B22F 1/00; B22F 1/052; B22F 1/054; B22F 1/06;
B22F 1/107; B22F 3/14; B22F 7/04; H01B 1/22

(22) Date of filing: 19.04.2024

(86) International application number:
PCT/JP2024/015619

(87) International publication number:
WO 2024/225196 (31.10.2024 Gazette 2024/44)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 25.04.2023 JP 2023071339

(71) Applicant: Toppan Holdings Inc.
Tokyo 110-0016 (JP)

(72) Inventors:
• SEKIGUCHI Takuya
Tokyo 110-0016 (JP)
• MORI Akihito
Tokyo 110-0016 (JP)
• MORII Masato
Tokyo 110-0016 (JP)

(74) Representative: Plasseraud IP
104 Rue de Richelieu
CS92104
75080 Paris Cedex 02 (FR)

(54) JOINING MATERIAL AND METHOD FOR PRODUCING JOINING BODY

(57) A joining material includes: metal particles including substantially spherical metal particles (A); and a solvent for dispersing the metal particles, wherein the metal particles (A) have D50 of 0.3 $\mu$m to 0.5 $\mu$m and a minimum particle size Dmin of greater than 0.08 $\mu$m.

EP 4 703 064 A1

**Description**

[Technical Field]

The present invention relates to a joining material and a method of producing a joined body.
The present application is based on and claims the benefit of priority from Japanese Patent Application No. 2023-071339, filed April 25, 2023, the content of which is incorporated herein by reference.

[Background Art]

Silver and copper have high thermal conductivity and a high melting point, and are regarded as promising raw materials of joining materials for joining conductive components together, as an alternative to solder. In particular, silver and copper are highly promising as packaging materials for power semiconductors, which have high heat generation density. However, when using a joining material containing silver particles or copper particles, the joining material is usually fired at a temperature lower than or equal to the melting point of these metals to join the conductive components together (in other words, sintered diffusion bonding). Therefore, the joining portion formed by sintering becomes a porous body containing many pores inside. However, when the operating temperature of the semiconductor greatly fluctuates, thermal stress is generated in the joining portion, and the pores become a source of thermal stress concentration, causing damage to the joining portion. In addition, the thermal conductivity of the joining portion in which pores exist is reduced. Therefore, it is preferred that the number of pores generated in the joining portion is small.
In contrast, in order to form a dense sintered film having few pores, a method is typically used in which a joining material is heated while a laminate of conductive components and the joining material is pressed in the lamination direction. As a method for forming a sintered film, for example, a method is disclosed in which a laminate of conductive components and a joining material containing silver nanoparticles (particle size 20 nm) is heated at 300°C and pressed at a pressure of 60 MPa to form a sintered film having a porosity of approximately 2.5%. Further, it is disclosed that a sintered film having a porosity of approximately 8% is formed using a joining material containing silver nanoparticles (particle size 18 nm), silver submicron particles (particle size 150 nm) and silver micron particles (particle size 5,063 nm) (see NPL 1). Thus, a joined body obtained by joining conductive components together using a joining material containing silver nanoparticles has the advantages of high resistance to thermal shock tests and high reliability.

[Citation List]

[Non-Patent Literature]

NPL 1: Degradation Mechanism of Pressure-Assisted Sintered Silver by Thermal Shock Test, Energies 2021, 14, 5532

[Summary of Invention]

[Technical Problem]

However, in the technique disclosed in NPL 1, applying a high pressure of 60 MPa poses the risk of cracking semiconductor chips or deforming substrates, and also requires frequent maintenance of a press used during pressure application. In order to avoid these problems, it is required to keep the pressure during pressure application at 20 MPa or less, but NPL 1 does not disclose such means.
Further, in the technique disclosed in NPL 1, when the joining portion (sintered film) has a large thickness, in particular, 100 $\mu$m or greater, cracking due to shrinkage of the dried product may be likely to occur when the joining material is dried in the process of forming the joining portion.
The present invention has been made to provide a joining material for forming a joining portion that joins conductive components together, which can suppress cracking in a dried joining material when forming a joining portion from the joining material even when the dried joining material is thick, and can form a joining portion having few pores even when the dried joining material is fired while being pressed at a low pressure of approximately 20 MPa or less.

[Solution to Problem]

In order to solve the above problems, the present invention adopts the following configuration.

[1] A joining material for joining conductive components together, the joining material including: metal particles including substantially spherical metal particles (A); and a solvent for dispersing the metal particles, wherein the metal particles (A) have a particle size D50 at a cumulative volume of 50% of 0.3 μm to 0.5 μm and a minimum particle size Dmin of greater than 0.08 μm, as measured by laser diffraction/scattering particle size distribution measurement.

[2] The joining material according to [1], wherein the metal particles include metal particles (B) different from the metal particles (A), and the metal particles (B) have a minimum particle size Dmin of greater than 0.08 μm, as measured by laser diffraction/scattering particle size distribution measurement.

[3] The joining material according to [1] or [2], further including a resin component which is a curable resin, a non-curable resin or a thermoplastic resin in the solvent, wherein a ratio of a content of the resin component to a content of the metal particles in the joining material is less than 0.01 mass%.

[4] The joining material according to [1] or [2], wherein the joining material does not contain a resin component which is a curable resin, a non-curable resin or a thermoplastic resin in the solvent.

[5] The joining material according to any one of [1] to [4], wherein the metal particles (A) have a particle size D90 at a cumulative volume of 90% of less than 0.8 μm, as measured by laser diffraction/scattering particle size distribution measurement.

[6] The joining material according to any one of [1] to [5], wherein both the metal particles (A) and the metal particles (B) are silver particles.

[7] The joining material according to any one of [1] to [6], wherein the metal particles (A) have a specific surface area in a range of 0.95 m$^2$/g to 1.5 m$^2$/g.

[8] A method of producing a joined body in which a conductive first component and a conductive second component are bonded via a conductive joining portion, the method including: attaching the joining material according to any one of [1] to [7] to a first surface of the first component or a second surface of the second component; drying the attached joining material to form a dried joining material; laminating the first component and the second component with the dried joining material therebetween to produce a laminate; and firing the dried joining material in the laminate at a temperature higher than a temperature at which the joining material has been dried to thereby form the joining portion from the dried joining material.

[9] The method of producing a joined body according to [8], wherein the joining portion has a thickness of 100 μm or greater.

[Advantageous Effects of Invention]

According to the present invention, a joining material for forming a joining portion that joins conductive components together is provided, which can suppress cracking in a dried joining material when forming a joining portion from the joining material even when the dried joining material is thick, and can form a joining portion having few pores even when the dried joining material is fired while being pressed at a low pressure of approximately 20 MPa or less.

[Brief Description of Drawings]

Fig. 1 is a cross-sectional view schematically illustrating an example of a joined body to which a production method according to an embodiment of the present invention is applied.

Fig. 2A is a cross-sectional view schematically illustrating an example of a method of producing a joined body according to an embodiment of the present invention, and illustrates an attaching step.

Fig. 2B is a diagram for illustrating a drying step subsequent to the step of Fig. 2A.

Fig. 2C is a diagram for illustrating a laminating step subsequent to the step of Fig. 2B.

Fig. 2D is a diagram for illustrating a firing step subsequent to the step of Fig. 2C.

Fig. 2E is a diagram for illustrating a joined body after the step of Fig. 2D.

Fig. 3A is a cross-sectional view schematically illustrating another example of a method of producing a joined body according to an embodiment of the present invention, and illustrates an attaching step.

Fig. 3B is a diagram for illustrating a drying step subsequent to the step of Fig. 3A.

Fig. 3C is a diagram for illustrating a laminating step subsequent to the step of Fig. 3B.

Fig. 3D is a diagram for illustrating a firing step subsequent to the step of Fig. 3C.

Fig. 3E is a diagram for illustrating a joined body after the step of Fig. 3D.

Fig. 4 is image data of metal particles (A)-1 used in Example 1 acquired by SEM.

Fig. 5 is image data of metal particles (A)-1 used in Example 2 acquired by SEM.

Fig. 6 is image data of metal particles (B)-1 used in Comparative Example 1 acquired by SEM.

Fig. 7 is image data of metal particles (B)-2 used in Comparative Example 2 acquired by SEM.

Fig. 8 is image data of metal particles (B)-3 used in Comparative Example 3 acquired by SEM.

[Description of Embodiments]

◊ Joining Material

A joining material according to an embodiment of the present invention includes: metal particles including substantially spherical metal particles (A); and a solvent for dispersing the metal particles, wherein a particle size D50 of the metal particles (A) at a cumulative volume of 50% of 0.3 $\mu$m to 0.5 $\mu$m and a minimum particle size Dmin of greater than 0.08 $\mu$m, as measured by laser diffraction/scattering particle size distribution measurement.

With this configuration, when forming a joining portion from the joining material, even if a dried joining material, which is a dried product of the joining material, has a large thickness, cracking in the dried joining material can be suppressed. Further, in a laminate obtained by laminating conductive components together with a dried joining material therebetween, a joining portion having few pores can be formed even when the dried joining material is fired while being pressed at a low pressure of approximately 20MPa or less.

The following description will be given of a joining material according to the present embodiment. In the joining material, the ratio of the total content of one or more components contained in the joining material, which will be described later, to the total mass of the joining material does not exceed 100 mass%.

<<Metal Particles>>

In the present embodiment, the metal particles contained in the joining material include at least metal particles (A). Although details will be described later, the metal particles may further include metal particles (B).

The metal particles (A) may have a substantially spherical shape.

In this specification, the term "substantially spherical" means a spherical shape or a shape that can be regarded as a spherical shape, not limited to the case of the metal particles (A), and more specifically, means a particle shape whose aspect ratio obtained by [major axis of particle] / [minor axis of particle] is 2 or less. The aspect ratio is preferably 1.6 or less, and more preferably 1.3 or less. The surface of substantially spherical particles may be composed of only a curved surface, or may include a flat surface, or may include a corner formed by two flat surfaces connected to each other at a predetermined angle. The surface of substantially spherical particles may be smooth or may have asperities.

The metal particles (A) used may be any commercially available spherical or substantially spherical particles as long as they satisfy the above particle size conditions.

Preferably, the metal particles (A) may be of a metal species having high thermal conductivity and a high melting point.

For example, the thermal conductivity of the metal species of the metal particles (A) (e.g., thermal conductivity in the bulk) may preferably be 350 W/mK or greater, and more preferably 350 W/mK to 450 W/mK. This allows heat to be quickly released, for example, even when the temperature of heat generated by a semiconductor or the like that is in contact with the joining material is high (e.g., 150°C or higher).

For example, the melting point of the metal species of the metal particles (A) may preferably be 900°C or higher, and more preferably 900°C to 1100°C.

The metal species of the metal particles (A) contained in the joining material may be only one type or two or more types, and when two or more types are contained, the combination and ratio of these can be arbitrarily selected.

Among these, the metal species of the metal particles (A) is preferably silver or copper, and more preferably silver. That is, the metal particles (A) are preferably silver particles or copper particles, and more preferably silver particles. The metal species of the metal particles (A) is not limited to pure silver or pure copper, and may be a silver alloy or a copper alloy.

Examples of the silver particles in the metal particles (A) include silver particles obtained by a reduction method and silver particles obtained by an atomization method.

The silver particles may be a surface-treated product whose surface has been chemically treated (treated with a chemical substance), or may be a surface-untreated product whose surface has not been chemically treated.

In general, silver particles obtained by a reduction method are surface-treated products, and silver particles obtained by an atomization method are surface-untreated products.

<Particle Size Distribution of Metal Particles>

In the present embodiment, the particle size distribution of the metal particles was measured by laser diffraction/scattering particle size distribution measurement.

Hereinafter, the minimum particle size of the metal particles as measured by laser diffraction/scattering particle size distribution measurement is referred to as "Dmin", the particle size of the metal particles at a cumulative volume of 10% is referred to as "D10", the particle size of the metal particles at a cumulative volume of 50% is referred to as "D50", the particle size of the metal particles at a cumulative volume of 90% is referred to as "D90", and the maximum particle size of the metal particles is referred to as "Dmax".

D50 of the metal particles (A) may be 0.3 $\mu$m to 0.5 $\mu$m, and for example, any one of 0.3 $\mu$m to 0.4 $\mu$m, 0.45 $\mu$m to 0.5 $\mu$m, and 0.35 $\mu$m to 0.45 $\mu$m. D50 greater than or equal to the lower limit is effective in suppressing cracking in the dried joining material even when the dried joining material is thick. D50 less than or equal to the upper limit is effective in forming a joining portion having few pores even when the dried joining material is fired while being pressed at a low pressure.

Dmin of the metal particles (A) may be greater than 0.08 $\mu$m, and the joining material may not necessarily contain metal particles (A) having a particle size of 0.08 $\mu$m or less. In other words, for example, when the particle size of the metal particles (A) on a volume basis is measured by laser diffraction/scattering particle size distribution measurement, no particles having a particle size of 0.08 $\mu$m or less may be observed. Using such metal particles (A) can suppress cracking in the dried joining material even when the dried joining material is thick.

Dmin of the metal particles (A) may be greater than 0.08 $\mu$m, preferably 0.09 $\mu$m or greater, more preferably 0.12 $\mu$m or greater, and even more preferably 0.15 $\mu$m or greater. Dmin within the above range is effective in suppressing cracking in the dried joining material even when the dried joining material is thick.

Further, Dmin is preferably 0.21 $\mu$m or less. Such metal particles (A) are easier to prepare and readily available. For example, particles having D50 in the range of 0.3 $\mu$m to 0.5 $\mu$m and Dmin greater than 0.21 $\mu$m (that is, particles having a narrow grain size distribution) may be difficult to produce.

In one embodiment, Dmin may be, for example, greater than 0.08 $\mu$m and 0.21 $\mu$m or less, preferably 0.09 $\mu$m to 0.21 $\mu$m, more preferably 0.12 $\mu$m to 0.21 $\mu$m, and even more preferably 0.15 $\mu$m to 0.21 $\mu$m. However, these are merely examples of Dmin.

D90 of the metal particles (A) is not particularly limited, but is preferably less than 0.8 $\mu$m, more preferably 0.78 $\mu$m or less, even more preferably 0.72 $\mu$m or less, and still even more preferably 0.65 $\mu$m or less. D90 within the above range is effective in forming a joining portion having few pores even when the dried joining material is fired while being pressed at a low pressure.

Further, D90 is preferably 0.45 $\mu$m or greater. Such metal particles (A) are easier to prepare and readily available. For example, particles having D50 in the range of 0.3 $\mu$m to 0.5 $\mu$m and D90 smaller than 0.45 $\mu$m (that is, particles having a narrow grain size distribution) may be difficult to produce.

In one embodiment, D90 may be, for example, 0.45 $\mu$m or greater and less than 0.8 $\mu$m, preferably 0.45 $\mu$m to 0.78 $\mu$m, more preferably 0.45 $\mu$m to 0.72 $\mu$m, and even preferably 0.45 $\mu$m to 0.65 $\mu$m. However, these are merely examples of D90.

D10 of the metal particles (A) is not particularly limited, but is preferably 0.18 $\mu$m or greater, more preferably 0.24 $\mu$m or greater, even more preferably 0.3 $\mu$m or greater. D10 within the above range is effective in suppressing cracking in the dried joining material even when the dried joining material is thick.

Further, D10 is preferably 0.34 $\mu$m or less. Such metal particles (A) are easier to prepare and readily available. This is because, as described above, particles having a narrow grain size distribution may be difficult to produce.

In one embodiment, D10 may be, for example, 0.18 $\mu$m to 0.34 $\mu$m, preferably 0.24 $\mu$m to 0.34 $\mu$m, and more preferably 0.3 $\mu$m to 0.34 $\mu$m. However, these are merely examples of D10.

Dmax of the metal particles (A) is preferably 2 $\mu$m or less. In other words, for example, when the particle size of the metal particles (A) on a volume basis is measured by laser diffraction/scattering particle size distribution measurement, it is preferred that no particles having a particle size of greater than 2 $\mu$m are observed. Further, Dmax may be, for example, 1.85 $\mu$m or less, and preferably 1.7 $\mu$m or less. Dmax within the above range is effective in forming a joining portion having few pores even when the dried joining material is fired while being pressed at a low pressure.

Further, Dmax is preferably 1.5 $\mu$m or greater. Such metal particles (A) are easier to prepare and readily available. This is because, as described above, particles having a narrow grain size distribution may be difficult to produce.

In one embodiment, Dmax may be, for example, 1.5 $\mu$m to 2 $\mu$m, preferably 1.5 $\mu$m to 1.85 $\mu$m, and more preferably 1.5 $\mu$m to 1.7 $\mu$m. However, these are merely examples of Dmax.

The specific surface area of the metal particles (A) is not particularly limited, but is preferably 0.8 $m^2$/g to 1.7 $m^2$/g, more preferably 0.8 $m^2$/g to 1.3 $m^2$/g, even more preferably 1.1 $m^2$/g to 1.7 $m^2$/g, and still even more preferably 1.1 $m^2$/g to 1.3 $m^2$/g. When the specific surface area of the metal particles (A) is within the above range, the joining material has a viscosity more suitable for applying an attachment means such as printing and coating.

The specific surface area of the particles, not limited to the metal particles (A), can be measured by known methods such as a permeation method and a gas adsorption method using gas molecules such as nitrogen.

In the joining material, the ratio of the content of the metal particles (A) to the total mass of the joining material ([content of the metal particles (A) in the joining material (parts by mass)] / [total mass of the joining material (parts by mass)] $\times$ 100) is preferably 60 mass% to 93 mass%, more preferably 70 mass% to 93 mass%, and even more preferably 80 mass% to 93 mass%. When the ratio is greater than or equal to the lower limit, the joining portion can be formed more efficiently. When the ratio is smaller than or equal to the upper limit, the fluidity of the joining material is further improved, and the joining material can be more easily handled.

<<Solvent>>

Since the joining material contains a solvent, it is fluid and easy to handle.

The joining material is typically in a paste or liquid form.

The term "solvent" as used herein is a concept that encompasses components that are liquid at room temperature and dissolve solutes, and components that are liquid at room temperature and function as dispersing media for dispersing dispersoids, unless otherwise specified.

The term "room temperature" as used herein refers to a temperature that is not particularly cooled or heated, that is, a normal temperature, examples of which are 15°C to 25°C.

The solvent is not particularly limited as long as it can be removed (vaporized) under heating conditions, and is preferably a solvent having no reactivity with components other than the solvent, such as the metal particles (A) in the joining material.

Examples of the solvent include aromatic hydrocarbons such as toluene, o-xylene, m-xylene and p-xylene; aromatic hydrocarbons such as pentane, hexane, cyclohexane, heptane, octane, cyclooctane, nonane, decane, undecane, dodecane, tridecane, tetradecane, pentadecane and decahydronaphthalene; halogenated hydrocarbons such as dichloromethane and chloroform; alcohols such as hexanol (e.g., 1-hexanol), heptanol (e.g., 1-heptanol), octanol (e.g., 1-octanol), nonanol (e.g., 1-nonanol), decanol (e.g., 1-decanol), benzyl alcohol, cyclohexanol and terpineol; esters such as ethyl acetate, monomethyl glutarate and dimethyl glutarate; ethers such as diethylether, tetrahydrofuran (THF) and 1,2-dimethoxyethane (dimethyl cellosolve); alcohol ethers (compounds having both a hydroxyl group and an ether bond in one molecule) such as propylene glycol monomethyl ether (also known as: 1-methoxy-2-propanol), 3-methoxy-3-methyl-1-butanol and butylcarbitol (also known as: diethylene glycol monobutyl ether); ketones such as acetone, methyl ethyl ketone (MEK), cyclohexanone, 2-octanone and diisobutyl ketone (also known as: 2,6-dimethyl-4-heptanone); hydroxyketones such as diacetone alcohol (also known as: 4-hydroxy-4-methyl-2-pentanone); enones such as isophorone (also known as: 3,5,5-trimethylcyclohexa-2-en-1-one); nitriles such as acetonitrile; amides such as N,N-dimethylformamide (DMF) and N,N-dimethylacetamide; and alcohol esters (compounds having both a hydroxyl group and an ester bond in one molecule) such as Texanol (2,2,4-trimethyl-1,3-pentanediol monoisobutyrate).

The solvent contained in the joining material may be only one type or two or more types, and when two or more types are contained, the combination and ratio of these can be arbitrarily selected.

In the joining material, the ratio of the content of the solvent to the total mass of the joining material ([content of the solvent in the joining material (parts by mass)] / [total mass of the joining material (parts by mass)] $\times$ 100) is preferably 7 mass% to 40 mass%, more preferably 7 mass% to 30 mass%, and even more preferably 7 mass% to 20 mass%. When the ratio is greater than or equal to the lower limit, the fluidity of the joining material is further improved, and the joining material can be more easily handled. When the ratio is smaller than or equal to the upper limit, the content of the metal particles (A) in the joining material can be further increased, and the joining portion can be formed more efficiently.

<<Other Components>>

The joining material may or may not contain other components that do not correspond to either the metal particles (A) or the solvent, as long as the effects of the present invention are not impaired.

The other components are not particularly limited as long as the effects of the present invention are not impaired, and can be arbitrarily selected according to the purpose.

The other components contained in the joining material may be only one type or two or more types, and when two or more types are contained, the combination and ratio of these can be arbitrarily selected.

Examples of the other components contained in the joining material include metal particles (B) other than the metal particles (A), and resin components. That is, the joining material may further contain either or both of the metal particles (B) and a resin component.

<Metal Particles (B)>

The metal particles (B) are metal particles different from the metal particles (A). In the present embodiment, the metal particles (A) and the metal particles (B) being different from each other means, for example, that the metal species, particle size distribution or shape of the particles of the two types of metal particles are different from each other.

For example, when the metal species of the metal particles (A) is silver, the metal species of the metal particles (B) may be a metal species other than silver (e.g., copper). When the metal particles (A) have a substantially spherical shape, the metal particles (B) may have a shape other than a substantially spherical shape (for example, a plate shape).

The two types of metal particles having different particle size distributions from each other include cases where D50 values are different from each other and where the spread of the particle size distribution is different from each other. When D50 values are different from each other, the particle size distribution of a mixture obtained by mixing two types of particles has two peaks of grain size. Further, even when D50 values of two types of particles are equal to each other, the case where the spread of the particle size distribution of the two types of metal particles is different from each other is also included in the "case where the grain size distributions of the metal particles (A) and the metal particles (B) are different from each other". The two types of metal particles having different spread of the particle size distribution means, for example, that at least one of Dmin, D10, D90 and Dmax is different from each other. That is, it refers to the case where the spread of the particle size distribution when two types of particles are mixed is different from the spread of the tail of the particle size distribution of only one type.

Dmin of the metal particles (B) may be greater than 0.08 $\mu$m, and the joining material may not necessarily contain the metal particles (B) having a particle size of 0.08 $\mu$m or less. In other words, for example, when the particle size of the metal particles (B) on a volume basis is measured by laser diffraction/scattering particle size distribution measurement, no particles having a particle size of 0.08 $\mu$m or less may be observed.

The metal particles (B) are not particularly limited as long as the above conditions are satisfied.

Examples of the metal species of the metal particles (B) include the same metal species as those of the metal particles (A).

Examples of the metal particles (B) include metal particles having a shape other than a substantially spherical shape; substantially spherical metal particles having a D50 value of less than 0.3 $\mu$m; and substantially spherical metal particles having a D50 value of greater than 0.5 $\mu$m.

A typical example of the shape of the metal particles (B) other than a substantially spherical shape is a plate shape.

The term "plate shape" for the metal particles as used herein refers to a shape having two major surfaces of a substantially polygonal shape such as a substantially triangular shape (triangular shape or a shape that can be regarded as a triangular shape), a substantially pentagonal shape (pentagonal shape or a shape that can be regarded as a pentagonal shape) or a substantially hexagonal shape (hexagonal shape or a shape that can be regarded as a hexagonal shape), or an irregular shape in which some of the sides or corners of the substantially polygonal shape can be regarded as being notched.

The thickness of the plate (that is, the width between the two major surfaces, i.e., the thickness of the plate in the direction perpendicular to the major surfaces) is 40 nm or less, and the maximum length of the two major surfaces (in other words, the particle size) is 10 nm to 1000 nm.

The aspect ratio of the plate shaped metal particles (= [maximum length of major surface (particle size)] / [width between major surfaces]) is 3 or greater.

The metal species of the metal particles (B) contained in the joining material may be only one type or two or more types, and when two or more types are contained, the combination and ratio of these can be arbitrarily selected.

The metal species of the metal particles (B) is preferably silver or copper, and more preferably silver. The metal species of the metal particles (B) is not limited to pure silver or pure copper, and may be a silver alloy or a copper alloy.

It is preferred that both the metal particles (A) and the metal particles (B) contained in the joining material are silver particles.

In the joining material, the ratio of the content of the metal particles (B) to the total mass of the joining material ([content of the metal particles (B) in the joining material (parts by mass)] / [total mass of the joining material (parts by mass)] $\times$ 100) is preferably 1 mass% or less, more preferably 0.5 mass% or less, even more preferably 0.3 mass% or less, and still even more preferably 0.1 mass% or less. When the ratio is smaller than or equal to the upper limit, the effects obtained by using the metal particles (A) are further enhanced.

When the particle size of the metal particles on a volume basis is measured by laser diffraction/scattering particle size distribution measurement for the joining material, the presence of the metal particles (B) can be confirmed if multiple peaks in the grain size distribution are observed. If the difference between D50 of the metal particles (B) and D50 of the metal particles (A) is relatively large, multiple peaks can be easily observed.

When observing a joining material with an SEM or the like, the presence of the metal particles (B) can be confirmed if metal particles having a shape other than a substantially spherical shape, such as a plate shape, are observed.

<Resin Component>

The resin component can be arbitrarily selected according to the purpose, and is not particularly limited.

The resin component may be, for example, either a curable resin or a non-curable resin, or may be a thermoplastic resin. The resin component may be dissolved in a solvent, or may be disperses in a solvent. The resin component may be a binder that contributes to bonding between the metal particles or between the joining material and the adherend, or may be spacer particles that are dispersed in a solvent and serve as spacers between the metal particles.

It should be noted that a resin provided on the surface of the metal particles for chemical treatment of the surface of the metal particles is not included in the definition of the resin component in the present embodiment.

Further, the joining material of the present embodiment may not necessarily contain a resin component (for example, a binder or spacer particle). A smaller content of the resin component is preferred, and in the joining material, the ratio of the content of the resin component to the total content of the metal particles ([content of the resin component in the joining material (parts by mass)] / [total content of the metal particles in the joining material (parts by mass)] $\times$ 100) is preferably less than 0.01 mass%, and more preferably 0.005 mass% or less. When the resin component is contained in an amount of less than 0.01 mass%, the resin component may be able to reduce the porosity of the joining material or suppress the occurrence of cracking. However, if the resin component remains in the fired joining material, the remaining resin component may increase the porosity. Therefore, it is preferred that the ratio of the content of the resin component in the joining material is less than 0.01 mass% or the resin component contains no resin component.

Therefore, it can be said that the ratio of the content of the resin component is preferably 0 mass% or greater and less than 0.01 mass%.

The ratio of less than 0.01 mass% or containing no resin component is even more effective in suppressing cracking in the dried joining material even when the dried joining material is thick, and forming a joining portion having few pores even when the dried joining material is fired while being pressed at a low pressure.

The resin component contained in the joining material only one type or two or more types, and when two or more types are contained, the combination and ratio of these can be arbitrarily selected.

When the metal particles include the metal particles (A) and the metal particles (B) in the joining material, the ratio of the content of the resin component to the total content of the metal particles (A) and the metal particles (B) is [content of the resin component in the joining material (parts by mass)] / [total content of the metal particles (A) and the metal particles (B) in the joining material (parts by mass)] $\times$ 100. In this case also, the ratio of the content of the resin component is preferably less than 0.01 mass%, and more preferably 0.005 mass% or less.

When the joining material contains no metal particles (B), the content of the metal particles (B) in the joining material is 0 part by mass. Similarly, when the joining material contains no resin component, the content of the resin component in the joining material is 0 part by mass.

The joining material may contain, as the above-mentioned other components, a component (X) which does not correspond to the metal particles (B) or the resin component. In this case, in the joining material, the ratio of the content of the component (X) to the total mass of the joining material ([content of the component (X) (parts by mass)] / [total mass of the joining material (parts by mass)] $\times$ 100) is preferably 5 mass% or less, more preferably 3 mass% or less, and even more preferably 1 mass% or less. The ratio of less than or equal to the upper limit is even more effective in suppressing cracking in the dried joining material even when the dried joining material is thick, and forming a joining portion having few pores even when the dried joining material is fired while being pressed at a low pressure.

Further, the ratio of the content of the component (X) is 0 mass% or greater.

In the joining material, the ratio of the total content of the metal particles (A) and the solvent to the total mass of the joining material ([total content of the metal particles (A) and the solvent in the joining material (parts by mass)] / [total mass of the joining material (parts by mass)] × 100) is preferably 95 mass% or greater, more preferably 97 mass% or greater, and even more preferably 99 mass% or greater. The ratio of greater than or equal to the lower limit is even more effective in suppressing cracking in the dried joining material even when the dried joining material is thick, and forming a joining portion having few pores even when the dried joining material is fired while being pressed at a low pressure.

Further, the ratio of the total content of the metal particles (A) and the solvent to the total mass of the joining material is 100 mass% or less.

As described above, the joining material according to the present embodiment includes: metal particles including substantially spherical metal particles (A); and a solvent for dispersing the metal particles, wherein the metal particles (A) have a particle size D50 at a cumulative volume of 50% of 0.3 $\mu$m to 0.5 $\mu$m and a minimum particle size Dmin of greater than 0.08 $\mu$m, as measured by laser diffraction/scattering particle size distribution measurement.

With this configuration, D50 in the range of 0.3 $\mu$m to 0.5 $\mu$m can suppress cracking in the dried joining material even when the dried joining material is thick, and form a joining portion having few pores even when the dried joining material is fired while being pressed at a low pressure of approximately 20 MPa or less.

Further, Dmin greater than 0.08 $\mu$m can suppress cracking in the dried joining material even when the dried joining material is thick.

Thus, in a laminate in which the joining material of the present embodiment is sandwiched between conductive components, a joining portion having few pores can be formed even when the laminate is fired while being pressed at a low pressure of approximately 20 MPa or less.

The metal particles may include metal particles (B) different from the metal particles (A). The metal particles (B) have a minimum particle size Dmin of greater than 0.08 $\mu$m, as measured by laser diffraction/scattering particle size distribution measurement.

The joining material further includes a resin component which is a curable resin, a non-curable resin or a thermoplastic resin in the solvent, wherein a ratio of a content of the resin component to a content of the metal particles in the joining material is less than 0.01 mass%. Alternatively, the joining material may not contain a resin component which is a curable resin, a non-curable resin or a thermoplastic resin in the solvent.

This makes it possible to reduce the porosity of the joining material and suppress the occurrence of cracking.

<<Method of Producing Joining Material>>

The joining material of the present embodiment can be obtained by blending the metal particles (A), a solvent, and if necessary, the above-mentioned other components.

After the components are blended, the resulting mixture may be used as it is as a joining material, or may be used as a joining material after known post-treatment or purification processes if necessary.

The blending order of the components is not particularly limited.

The method of mixing the compound is not particularly limited, and may be appropriately selected from known methods, such as mixing by rotating a stirrer, an agitating blade, or the like; mixing with a mixer, a three-roll mill, a kneader, a bead mill, or the like; and mixing by applying ultrasonic waves.

The temperature at which each component is blended is not particularly limited as long as each component does not deteriorate, but may preferably be 0°C to 40°C.

The blending time of each component is not particularly limited as long as each component does not deteriorate, but may preferably be 10 minutes to 12 hours.

◊ Method of Producing Joined Body

A method of producing a joined body according to an embodiment of the present invention is a method of producing a joined body in which a first conductive component (hereinafter simply referred to as a "first component") and a conductive second component (hereinafter simply referred to as a "second component") are bonded via a conductive joining portion (hereinafter simply referred to as a "joining portion"), the method including:

attaching a joining material according to the embodiment described above to a first surface of the first component or a second surface of the second component (hereinafter simply referred to as an "attaching step");

drying the attached joining material to form a dried joining material (hereinafter simply referred to as a "drying step");

laminating the first component and the second component with the dried joining material therebetween to produce a laminate (hereinafter simply referred to as a "laminating step"); and

firing the dried joining material in the laminate at a temperature higher than a temperature at which the joining material has been dried to thereby form the joining portion from the dried joining material (hereinafter simply referred to as a "firing step").

The conductive components such as the first component and the second component are not particularly limited as long as they have conductivity. Examples of the conductive components include metal components (metal members). Examples of the metal components include a metal layer provided by sputtering or plating on the surface of a semiconductor chip such as a silicon chip or a semiconductor element, or may be a metal layer such as an electrode provided on a resin substrate or a ceramic substrate.

The joining portion is formed using the joining material according to the embodiment described above, and is a metal sintered body.

For example, when the joining material contains silver particles as the metal particles (A), the metal sintered body is a silver sintered body, and when the joining material contains copper particles as the metal particles (A), the metal sintered body is a copper sintered body.

The joining portion has electrical conductivity and thermal conductivity, and is a useful alternative to solder.

In the production method, each step can be performed under atmospheric conditions.

If the constituent material of either or both of the first component and the second component to be joined is a metal that is easily oxidized (e.g., copper or the like), each step in the production method may be performed in an inert gas atmosphere. Examples of the inert gas include nitrogen gas and helium gas.

With reference to the drawings, a method of producing a joined body of the present embodiment will be described.

First, a joined body to which the production method of the present embodiment is applied will be described.

<<Joined Body>>

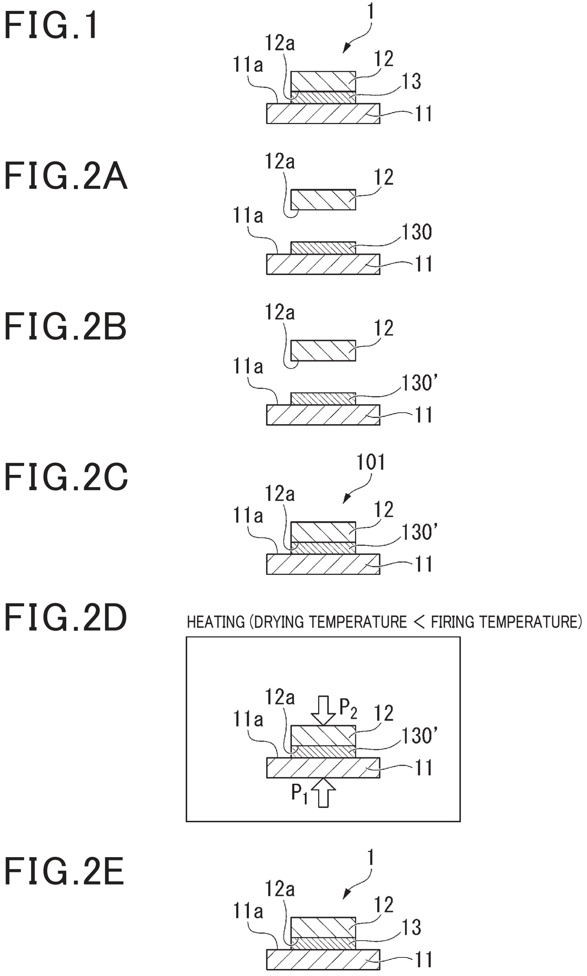

Fig. 1 is a cross-sectional view schematically illustrating an example of the joined body.

A joined body 1 shown in this example has a configuration in which a conductive first component 11 and a conductive second component 12 are bonded via a conductive joining portion 13.

A first surface 11a of the first component 11 is in contact with the joining portion 13.

A second surface 12a of the second component 12 is in contact with the joining portion 13.

The joined body 1 is formed of the first component 11, the joining portion 13 and the second component 12 laminated in this order in the thickness direction. Hereinafter, the direction in which the first component 11, the joining portion 13 and the second component 12 are laminated is referred to as a thickness direction.

The area of the first surface 11a of the first component 11 is preferably greater than or equal to that of the second surface 12a of the second component 12.

The first component 11 may have a sheet, plate or block shape.

The first component 11 preferably contains a metal, and is more preferably made of a metal.

Examples of the metal constituting the first component 11 include silver, copper, aluminum, gold, nickel, and the like.

The first component 11 may be formed of one layer (single layer), or may be formed of two or more layers. When the first component 11 is formed of multiple layers, these multiple layers may be the same or different from each other, and the combination of these multiple layers is not particularly limited.

In this specification, not limited to the case of the first component, the "multiple layers may be the same or different from each other" means that "all the layers may be the same or different from each other, or only some of the layers may be the same", and the "multiple layers may be different from each other" means that "the layers are different in at least one of the constituent material and the thickness".

When the first component 11 is formed of multiple layers, one layer or two or more layers of the first component 11 on the joining portion 13 side, for example, may be layers that improve adhesion to the joining portion 13.

The thickness of the first component 11 can be arbitrarily set according to the purpose of the joined body 1, and is not particularly limited.

The thickness of the first component 11 may be, for example, 10 $\mu$m to 10,000 $\mu$m.

When the first component 11 is formed of multiple layers, the total thickness of the layers is preferably the thickness of the first component 11.

Although the first component 11 is described as having a sheet, plate or block shape, the first component 11 may have any other shape than these shapes, and the shape of the first component 11 can be arbitrarily selected according to the purpose.

The second component 12 may have a sheet, plate or block shape.

The second component 12 preferably contains a metal, and is more preferably made of a metal, and examples of the metal constituting the second component 12 include the same metals as those constituting the first component 11.

The second component 12 may be formed of one layer (single layer), or may be formed of two or more layers. When the second component 12 is formed of multiple layers, these multiple layers may be the same or different from each other, and the combination of these multiple layers is not particularly limited.

When the second component 12 is formed of multiple layers, one layer or two or more layers of the second component 12 on the joining portion 13 side, for example, may be layers that improve adhesion to the joining portion 13.

The thickness of the second component 12 can be arbitrarily set according to the purpose of the joined body 1, and is not particularly limited.

The thickness of the second component 12 is preferably 0.05 $\mu$m to 10,000 $\mu$m, and may be, for example, 0.05 $\mu$m to 500 $\mu$m or greater than 500 $\mu$m and 10,000 $\mu$m or less.

When the second component 12 is formed of multiple layers, the total thickness of the layers is preferably the thickness of the second component 12.

Although the second component 12 is described as having a sheet, plate or block shape, the second component 12 may have any other shape than these shapes, and the shape of the second component 12 can be arbitrarily selected according to the purpose.

The joining portion 13 may have a sheet, plate or block shape.

The joining portion 13 may be formed of one layer (single layer), or may be formed of two or more layers. When the joining portion 13 is formed of multiple layers, these multiple layers may be the same or different from each other, and the combination of these multiple layers is not particularly limited.

The entire surface of the joining portion 13 on the first component 11 side is preferably in contact with the first surface 11a of the first component 11.

Although the thickness of the joining portion 13 may be 10 $\mu$m or greater and less than 100 $\mu$m, for example, it is preferably greater than 100 $\mu$m, more preferably 200 $\mu$m or greater, and even more preferably 300 $\mu$m or greater. When the thickness of the joining portion 13 is as large as 100 $\mu$m or greater, the thickness of the dried joining material must also be 100 $\mu$m or greater, but by using the joining material of the present embodiment, the effect of the present invention of suppressing cracking in the dried joining material when the dried joining material is thick can be achieved more significantly.

From the viewpoint of ease of forming the joining portion 13, the thickness of the joining portion 13 is preferably 400 $\mu$m or less.

Although the joining portion 13 is described as having a sheet, plate or block shape, the joining portion 13 may have any other shape than these shapes, and the shape of the joining portion 13 can be arbitrarily selected according to the purpose.

The area of the contact region between the surface of the joining portion 13 and the first component 11 (more specifically, the first surface 11a) and the area of the contact region between the surface of the joining portion 13 and the second component 12 (more specifically, the second surface 12a) may be the same or different from each other. The area of each contact region is preferably 9 mm$^2$ to 2,500 mm$^2$, and more preferably 9 mm$^2$ to 1,225 mm$^2$, and may be, for example, any one of 9 mm$^2$ to 576mm$^2$, 9 mm$^2$ to 144 mm$^2$, 225 mm$^2$ to 1,225 mm$^2$, 625 mm$^2$ to 1,225 mm$^2$, and 225 mm$^2$ to 576 mm$^2$. However, these are merely examples of the area of the contact regions. When the area of the contact regions is within the above range, the joining strength and heat dissipation between the components 11 and 12 and the joining portion 13.

The area of the second surface 12a of the second component 12 is preferably 50% to 150% of the surface of the joining portion 13 on the second component 12 side.

The area of the contact region between the second surface 12a of the second component 12 and the joining portion 13 is preferably 50% to 100% of the area of the entire surface of the second surface 12a.

The joining portion 13 is preferably in contact with the first component 11 on the entire surface on the first component 11 side.

In the joined body 1, one first component 11 and one second component 12 are bonded via one joining portion 13, but the joining form is not limited thereto.

For example, in the joined body, one first component and two or more second components may be bonded via one joining portion. In this case, the two or more second components may be all the same or all different, or only some of them may be different.

Further, in the joined body, for example, one first component and two or more second components may be bonded via two or more joining portions. In this case, the number of the second components and the number of the joining portions may be the same or different. Further, the two or more second components may be all the same or all different, or only some of them may be different.

The number of the first components and the number of the second components exemplified here may be reversed.

The joined body to which the production method of the present embodiment is applied is not limited to that shown in Fig. 1, and for example, some of the components of the joined body 1 shown in Fig. 1 may be modified, removed or added without departing from the gist of the present invention.

<<Porosity>>

The porosity was measured by forming a cross-section of the joining portion and observing the cross-section with a scanning electron microscope (SEM). The observed joining portion 13 was a portion where the dried joining material was fired while being sandwiched between the first surface 11a and the second surface 12a. That is, the porosity of the joining portion 13 that was sintered while being pressed by the first component 11 and the second component 12 at a predetermined pressure was measured.

Here, the ratio of the area of the portions corresponding to the pores in the cross-section to the area of the cross-section ([area of the portions corresponding to the pores] / [area of the cross-section] $\times$ 100) was defined as the "porosity". For example, the ratio of the area of the portions corresponding to the pores in a region surrounded by a predetermined contour line to the total area of the region surrounded by the contour line in the cross-section of the joining portion 13 ([area of the portions corresponding to the pores in the region surrounded by the contour line] / [area of the region surrounded by the contour line] $\times$ 100) may be defined as the "porosity".

The porosity is preferably 5% or less. By using the joining material of the present embodiment, a joining portion having few pores (low porosity) can be formed even when the dried joining material is fired while being pressed at a low pressure of approximately 20 MPa or less.

As is clear from the description of the calculation method of the porosity, the "area of the cross-section" in the formula for calculating the porosity includes not only the portion of the metal sintered body itself but also the area of the portions corresponding to the pores.

In calculation of the porosity of the joining portion, as will be described later in the examples, the image data of the cross-section acquired by SEM is subjected to binarization processing using image processing software to identify the pores and calculate the porosity, thereby calculating the porosity with higher accuracy.

When there is no bias in the portions of the pores in the cross-section, for example, the porosity of each of the regions surrounded by a predetermined contour line at several representative locations (for example, 2 to 3 locations) in the cross-section in the image data acquired by SEM may be calculated, and the average value thereof may be used as the porosity of the joining portion.

Next, a production method of the present embodiment will be described by using an example of the case of producing the joined body shown in Fig. 1.

◎ Production Method (1)

Figs. 2A to 2E are cross-sectional views schematically illustrating an example method of producing a joined body of the present embodiment (hereinafter simply referred to as a "production method (1)".

In each of the drawings, the same components as those shown in the drawings already described are denoted by the same reference signs as those in the drawings already described, and detailed description thereof will be omitted.

<<Attaching Step>>

As shown in Fig. 2A, in the attaching step of the production method (1), a joining material 130 is attached to the first surface 11a of the first component 11.

Examples of the method of attaching the joining material 130 to the first component 11 include known methods such as printing and coating.

Examples of the printing method include screen printing, flexographic printing, offset printing, dip printing, ink jet printing, dispenser printing, jet dispenser printing, gravure printing, gravure offset printing, pad printing, and the like.

Examples of the coating method include methods using various coaters such as a spin coater, an air knife coater, a curtain coater, a die coater, a blade coater, a roll coater, a gate roll coater, a bar coater, a rod coater and a gravure coater; methods using a wire bar; and methods using a coating device such as a slot die.

In attachment of the joining material 130 to the first component 11, a mask such as a metal mask plate may be used to attach the joining material 130 only to desired locations.

<<Drying Step>>

As shown in Fig. 2B, in the drying step subsequent to the attaching step of the production method (1), the attached joining material 130 is dried to form a dried joining material 130'.

The drying step volatilizes the solvent in the joining material 130, so that the solvent is not present in the dried joining material 130' or the solvent content is significantly lower than in the joining material 130.

The dried joining material 130' is not a metal sintered body and typically does not have the luster characteristic of metal, and can be distinguished from a desired metal sintered body by these external features.

The joining material 130 can be dried by a known method, and is preferably dried by heating under normal pressure.

The heating temperature (drying temperature) of the joining material 130 in the drying step can be appropriately adjusted according to the type of solvent, and is preferably 70°C or higher, more preferably 100°C or higher, and even more preferably 130°C or higher. The heating temperature of higher than or equal to the lower limit makes it possible to proceed drying of the joining material 130 more quickly. Further, since the drying step can sufficiently volatilize the solvent, it is possible to prevent the occurrence of bumping due to residual solvent in the firing step described later and suppress the occurrence of voids.

Further, the heating temperature is preferably 160°C or less. The heating temperature of lower than or equal to the upper limit makes it possible to suppress deterioration of the dried joining material 130'. For example, if the drying temperature is excessively high, the metal particles are necked (fused) together before the firing step, making it difficult to reduce the number of pores during pressure application.

The heating time (drying time) of the joining material 130 in the drying step can be appropriately adjusted according to the above heating temperature, and is preferably 1 minute to 40 minutes, more preferably 3 minutes to 30 minutes, and even more preferably 5 minutes to 20 minutes. When the heating time is within the above range, a desired dried joining material 130' can be formed more efficiently.

Although the thickness of the dried joining material 130' may be 10 $\mu$m or greater and less than 100 $\mu$m, for example, but is preferably 100 $\mu$m or greater, more preferably 200 $\mu$m or greater, and even more preferably 300 $\mu$m or greater. Dried products of typical joining materials are prone to cracking when they are thick. On the other hand, due to the use of the joining material 130, cracking in the dried joining material 130' can be suppressed even when the thickness is as large as 100 $\mu$m or greater.

Further, from the viewpoint of ease of forming the dried joining material 130', the thickness of the dried joining material 130' is preferably 400 $\mu$m or less.

<<Laminating Step>>

As shown in Fig. 2C, in the laminating step subsequent to the drying step of the production method (1), the first component 11 and the second component 12 are laminated with the dried joining material 130' therebetween to produce a laminate 101. That is, the laminate 101 is formed of the first component 11, the dried joining material 130' and the second component 12 laminated in this order in the thickness direction, and the dried joining material 130' is in close contact with the first component 11.

The first component 11 is in contact with the dried joining material 130' on the first surface 11a.

The second component 12 is in contact with the dried joining material 130' on the second surface 12a.

<<Firing Step>>

As shown in Fig. 2D, in the firing step subsequent to the laminating step of the production method (1), the dried joining material 130' in the laminate 101 is fired at a temperature (hereinafter simply referred to as a "firing temperature") higher than a temperature at which the joining material 130 has been dried.

When the joining material 130 is dried by heating, the heating temperature (firing temperature) of the dried joining material 130' is set higher than the heating temperature (drying temperature) of the joining material 130.

When the dried joining material 130' is fired, the temperature rise rate of the dried joining material 130' during heating is not particularly limited, but is preferably 30°C/min to 70°C/min, and more preferably 40°C/min to 60°C/min. When the temperature rise rate is within the above range, a metal sintered body (joining portion 13) having the desired characteristics can be produced more efficiently.

The firing temperature of the dried joining material 130' (temperature at which the metal particles (A) are sintered) is preferably 180°C or higher, and more preferably 200°C or higher, even more preferably 220°C or higher, and still even more preferably 240°C or higher. When the firing temperature is lower than or equal to the lower limit, a metal sintered body (joining portion 13) with higher purity can be obtained.

Further, from the perspective of suppressing excessive heating and obtaining a metal sintered body (joining portion 13) with good characteristics, the firing temperature of the dried joining material 130' is preferably 320°C or lower, more preferably 300°C or lower, and even more preferably 280°C or lower.

The firing time of the dried joining material 130' (time for sintering the metal particles (A)) is preferably 3 minutes to 120 minutes, and may be, for example, any one of 3 minutes to 60 minutes, 50 minutes to 90 minutes, and 80 minutes to 120 minutes. When the firing time (sintering time) is within the above range, a metal sintered body having the desired characteristics can be produced more efficiently.

In the firing step, the firing temperature within the above numerical range and the firing time within the above numerical range are preferred for firing of the dried joining material 130'.

In the firing step, it is preferred to perform firing (hereinafter simply referred to as a "pressure-firing") of the dried joining material 130' while pressing the laminate 101 in the thickness direction. This pressure-firing of the dried joining material 130' can form a joining portion having few pores.

When the laminate 101 is pressed in the thickness direction, the pressure applied to the laminate 101 may be either or both of a pressure $P_1$ applied from the first component 11 side and the pressure $P_2$ applied from the second component 12 side, as shown in Fig. 2D.

The term "pressure application" as used herein means increasing the pressure applied to an object by actively applying force to the object, and for example, simply supporting an object (simply exerting normal force) without actively applying force is not considered to be pressure application. In pressure application, for example, the position of the means of applying pressure changes by itself, with acceleration.

During pressure-firing, heating for firing the dried joining material 130' (laminate 101) and pressing the dried joining material 130' (laminate 101) may be started simultaneously, or pressing the dried joining material 130' may be started after the start of heating for firing the dried joining material 130', or heating for firing the dried joining material 130' may be started after the start of pressing the dried joining material 130'.

The pressure applied to the dried joining material 130' during pressure-firing is preferably 20 MPa or less, and more preferably 16 MPa or less. In general, when the pressure during pressure-firing is low, the number of pores in the joining portion increases and a dense joining portion cannot be obtained, but by using the joining material 130 of the present embodiment, a dense joining portion with few pores can be obtained even when the pressure is as low as less than or equal to the upper limit. Further, the pressure less than or equal to the upper limit can suppress damage such as cracking and deformation of the first component 11 and the second component 12.

Further, from the perspective of effectively obtaining the effect of pressure application, the pressure during pressure-firing is preferably 1 MPa or greater.

Here, the pressure at which the dried joining material 130' is pressed (pressure during pressure-firing) is the load applied to the laminate 101 during pressing, divided by the area of the region of the dried joining material 130' receiving the load. When both the pressure $P_1$ applied from the first component 11 side and the pressure $P_2$ applied from the second component 12 side are applied to the joining material 130', the pressure per unit area during pressure-firing is (pressure $P_1$/area of the first surface 11a receiving the pressure $P_1$ + pressure $P_2$/area of the second surface 12a receiving the pressure $P_2$).

As a result of the firing step, the joining portion 13 is formed from the dried joining material 130' to thereby obtain the desired joined body 1, as shown in Fig. 2E. The joining portion 13 is a metal sintered body formed from the joining material 130 through the dried joining material 130'.

Due to the use of the joining material 130, the joining portion 13 has few pores. Therefore, even when the temperature of the joined body 1 greatly fluctuates, concentration of thermal stress is suppressed in the joining portion 13, preventing damage to the joining portion 13. Further, since the metal particles used have high thermal conductivity, the joining portion 13 has high thermal conductivity.

In the method of producing the joined body (production method (1)) described above, the joining material is attached to the first surface of the first component, and the joining portion is formed from the joining material. However, the production method of the present embodiment may also be a method of producing the joined body (hereinafter simply referred to as a "production method (2)") in which the joining material is attached to the second surface of the second component, and the joining portion is formed from the joining material.

◎ Production Method (2)

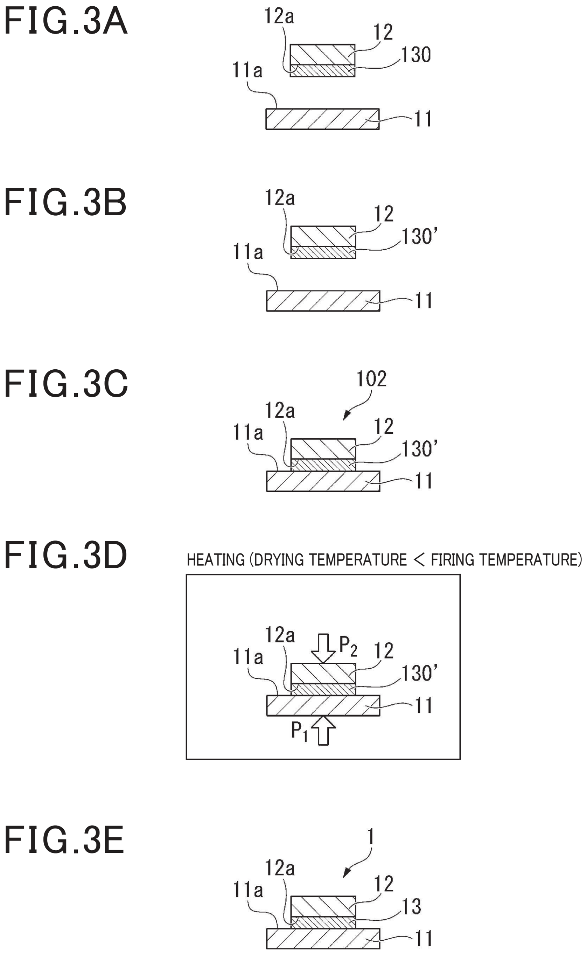

Figs. 3A to 3E are cross-sectional views schematically illustrating another example of the method of producing the joined body of the present embodiment, that is, the production method (2).

<<Attaching Step>>

As shown in Fig. 3A, in the attaching step of the production method (2), the joining material 130 is attached to the second surface 12a of the second component 12.

The attaching step in the production method (2) can be performed in the same manner as in the attaching step of the production method (1), except that the joining material 130 is attached to the second surface 12a of the second component 12 instead of the first surface 11a of the first component 11.

<<Drying Step>>

As shown in Fig. 3B, in the drying step subsequent to the attaching step of the production method (2), the attached joining material 130 is dried to form a dried joining material 130'.

The drying step in the production method (2) can be performed in the same manner as in the drying step of the production method (1), except that the second component 12 to which the joining material 130 is attached is used instead of the first component 11 to which the joining material 130 is attached.

The dried joining material 130' formed by the production method (2) is the same as the dried joining material 130' formed by the production method (1), except that it is in close contact with the second component 12 instead of the first component 11.

Also in the production method (2), due to the use of the joining material 130, cracking in the dried joining material 130' can be suppressed even when the thickness is as large as 100 $\mu$m or greater.

<<Laminating Step>>

As shown in Fig. 3C, in the laminating step subsequent to the drying step of the production method (2), the first component 11 and the second component 12 are laminated with the dried joining material 130' therebetween to produce a laminate 102. That is, the laminate 102 is formed of the first component 11, the dried joining material 130' and the second component 12 laminated in this order in the thickness direction, and the dried joining material 130' is in close contact with the second component 12.

The laminate 102 is the same as the laminate 101, except that the dried joining material 130' is in close contact with the second component 12 instead of the first component 11.

The laminating step in the production method (2) can be performed in the same manner as in the laminating step of the production method (1), except that the second component 12 having the dried joining material 130' is used instead of the first component 11 having the dried joining material 130', and the first component 11 not having the dried joining material 130' is used instead of the second component 12 not having the dried joining material 130'.

<<Firing Step>>

As shown in Fig. 3D, in the firing step subsequent to the laminating step of the production method (2), the dried joining material 130' in the laminate 102 is fired at a temperature higher than a temperature at which the joining material 130 has been dried.

The firing step in the production method (2) can be performed in the same manner as in the firing step in the production method (1). Also in the firing step in the production method (2), the dried joining material 130' is preferably subjected to pressure-firing.

As a result of the firing step of the production method (2), the joining portion 13 is formed from the dried joining material 130' to thereby obtain the desired joined body 1, as shown in Fig. 3E. The joining portion 13 is a metal sintered body formed from the joining material 130 through the dried joining material 130'. The joined body 1 obtained by the production method (2) is the same as the joined body 1 obtained by the production method (1).

Also in the production method (2), due to the use of the joining material 130, the joining portion 13 has few pores. Therefore, even when the temperature of the joined body 1 greatly fluctuates, concentration of thermal stress is suppressed in the joining portion 13, preventing damage to the joining portion 13. Further, since the metal particles used have high thermal conductivity, the joining portion 13 has high thermal conductivity.

Examples

The present invention will be described in more detail below with reference to specific examples. However, the present invention is not limited in any way to the examples described below.

The metal particles (A) and the metal particles (B) used in the following examples and comparative examples are both silver particles produced by a reduction method.

[Example 1]

<<Production of Joining Material>>

Metal particles (A)-1 (substantially spherical silver particles) (87 parts by mass) having the metal species, shape, grain size distribution and specific surface area shown in Table 1 and Texanol (13 parts by mass) were weighed into an agate mortar at room temperature, and kneaded for 15 minutes.

The obtained kneaded product was processed through a three-roll mill three times to obtain a desired paste-like joining material.

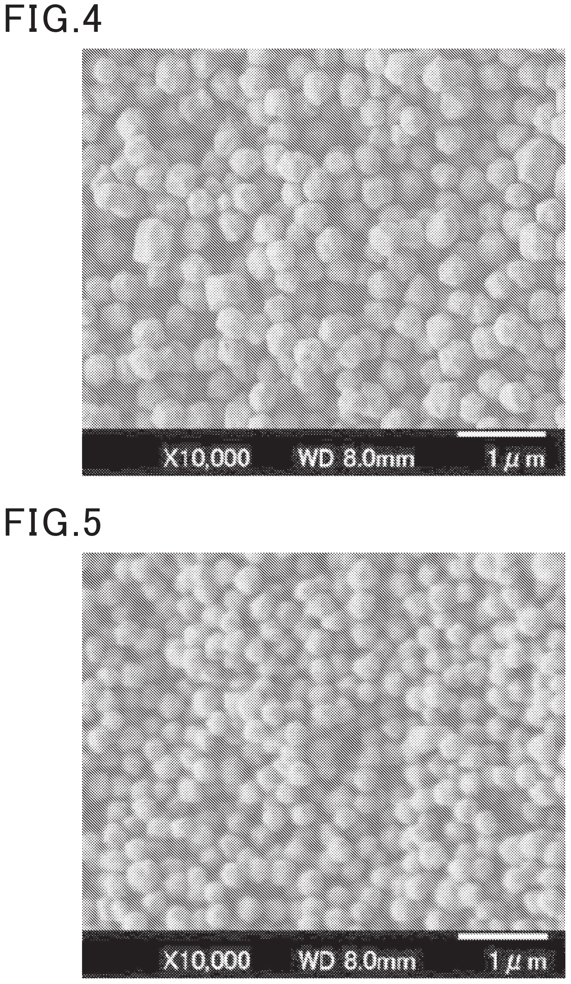

Fig. 4 shows the image data of the metal particles (A)-1 acquired by a scanning electron microscope (SEM) at a magnification of 10,000x.

<<Production of Joined Body>>

<Formation of Dried Joining Material and Evaluation of Effect of Suppressing Cracking>

A 20 mm × 20 mm, 1 mm-thick silver-plated copper plate provided with a 5 $\mu$m-thick silver-plated layer was prepared.

A 300 $\mu$m-thick metal mask plate was placed on the surface of the silver-plated copper plate on which the silver-plated layer was provided. A 7 mm × 7 mm rectangular shape was printed using the joining material. Thus, the joining material of a rectangular shape was attached to the surface of the silver-plated copper plate (attaching step).

Next, the silver-plated copper plate to which the joining material was attached was heated in a hot air oven at 145°C for 15 minutes to dry it by volatilizing the Texanol in the joining material, thereby forming a film-like dried joining material having a rectangular planar shape (drying step).

Next, the dried joining material was visually observed, and the effect of suppressing cracking in the dried joining material was evaluated according to the following criteria. The results are shown in Table 1.

[Evaluation Criteria]

A: No cracking occurred in the dried joining material, indicating high effect of suppressing cracking.

B: Slight cracking occurred in the dried joining material, and although the silver-plated copper plate was not seen through the cracks, the effect of suppressing cracking was poor.

C: Cracking was clearly observed in the dried joining material, and the silver-plated copper plate was seen through the cracks, indicating no or low effect of suppressing cracking.

<Production of Joined Body>

A backside-deposited silicon carbide (SiC) chip having a size of 5 mm × 5 mm and 0.35 mm thickness, in which a 50 nm-thick titanium film and a 100 nm-thick silver film were laminated in this order on one surface (in other words, rear surface) by sputtering, was prepared.

The entire exposed surface of the silver film in the backside-deposited silicon carbide chip was laminated on the surface of the dried joining material prepared as above on a side opposite to that in contact with the silver-plated copper plate (i.e., exposed surface) to thereby form a laminate in which the silver-plated copper plate, the dried joining material, and the backside-deposited silicon carbide chip were laminated in this order in the thickness direction (laminating step).

Further, a carbon sheet ("PERMA-FOIL (registered trademark)" manufactured by Toyo Tanso Co., Ltd.) was provided as a buffer material on the surface of the silicon carbide chip in the backside-deposited silicon carbide chip in the above laminate.

Next, the laminate with the carbon sheet thus obtained was pressed in the thickness direction using a servo press machine to start pressing the dried joining material at a pressure of 15 MPa, while heating was started at a temperature rise rate of approximately 50°C/min.

At this time, the laminate with the carbon sheet was placed between a pair of press plates in the servo press machine. The pair of press plates includes a first press plate on the backside-deposited silicon carbide chip side of the laminate with the carbon sheet and a second press plate on the silver-plated copper plate side. The first press plate was fixed to the servo press machine. Then, the second press plate was moved toward the first press plate side to apply pressure to the laminate with the carbon sheet from the silver-plated copper plate side while supporting the laminate with the carbon sheet by the first press plate. That is, the pressure application to the laminate with the carbon sheet was performed from the silver-plated copper plate side.

Then, after the heating temperature (in other words, the temperature of the laminate) reached 250°C, this temperature was maintained for 5 minutes. That is, it was heated and pressed at a temperature of 250°C and a pressure of 15 MPa for 5 minutes. Thus, the dried joining material was subjected to pressure-firing to form a joining portion from the dried joining material (firing step).

Next, cooling water was introduced into the servo press machine to start cooling, and when the temperature of the laminate reached 60°C, the pressure was released.

Thus, a desired joined body was obtained. The thickness of the joining portion in the joined body was greater than 100 µm.

<<Evaluation of Joined Body>>

<Evaluation of Effect of Suppressing Generation of Pores in Joining Portion>

The side surface of the joined body obtained above was mechanically polished to form a cross-section of the joined body, and polishing marks were removed by flat milling.

Next, a region near the center of the joining portion in the width direction in the cross-section was randomly observed in three fields of view using an SEM under conditions of an acceleration voltage of 4 kV and a magnification of 5,000x. The image data thus obtained was binarized using image processing software (Image J.), and the black regions were classified as pores to thereby calculate the porosity of the joining portion. Then, the effect of suppressing generation of pores in the joining portion was evaluated according to the following criteria. The results are shown in Table 1 together with the porosity.

[Evaluation Criteria]

A: The average porosity in the three fields of view was 5% or less, indicating high effect of suppressing generation of pores.

B: The average porosity in the three fields of view was greater than 5% and less than or equal to 10%, indicating poor effect of suppressing generation of pores.

C: The average porosity in the three fields of view was greater than 10%, indicating no or significantly low effect of suppressing generation of pores.

<<Production of Joining Material, Production of Joined Body, and Evaluation of Joined Body>>

[Example 2]

A joining material was produced and a joined body was produced and evaluated in the same manner as in Example 1, except that metal particles (A)-2 (substantially spherical silver particles) (87 parts by mass) shown in Table 1 were used instead of the metal particles (A)-1 (87 parts by mass). The results are shown in Table 1. The thickness of the joining portion in the joined body was greater than 100 µm.

Fig. 5 shows the image data of the metal particles (A)-2 acquired by an SEM at a magnification of 10,000x.

[Example 3]

A joining material was produced and a joined body was produced and evaluated in the same manner as in Example 1, except that metal particles (A)-3 (substantially spherical silver particles) (87 parts by mass) shown in Table 1 were used instead of the metal particles (A)-1 (87 parts by mass). The results are shown in Table 1. The thickness of the joining portion in the joined body was greater than 100 µm.

[Comparative Example 1]

A joining material was produced and a joined body was produced and evaluated in the same manner as in Example 1, except that metal particles (B)-1 (substantially spherical silver particles) (87 parts by mass) shown in Table 1 were used instead of the metal particles (A)-1 (87 parts by mass). The results are shown in Table 1. The thickness of the joining portion in the joined body was greater than 100 µm.

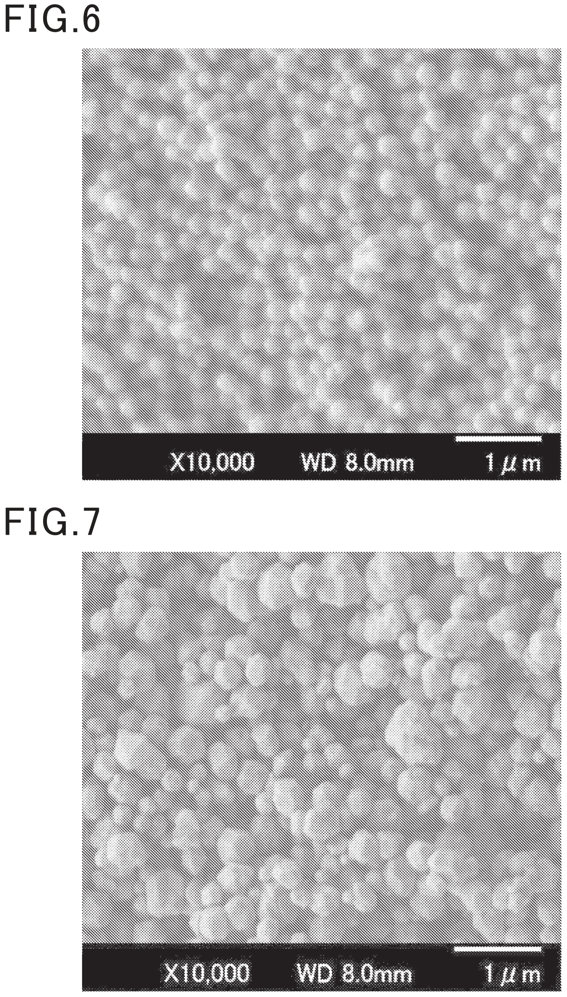

Fig. 6 shows the image data of the metal particles (B)-1 acquired by an SEM at a magnification of 10,000x.

[Comparative Example 2]

A joining material was produced and a joined body was produced and evaluated in the same manner as in Example 2, except that metal particles (B)-2 (substantially spherical silver particles) (87 parts by mass) shown in Table 2 were used instead of the metal particles (A)-1 (87 parts by mass). The results are shown in Table 2. The thickness of the joining portion in the joined body was greater than 100 $\mu$m.

Fig. 7 shows the image data of the metal particles (B)-2 acquired by an SEM at a magnification of 10,000x.

[Comparative Example 3]

A joining material was produced and a joined body was produced and evaluated in the same manner as in Example 1, except that metal particles (B)-3 (substantially spherical silver particles) (87 parts by mass) shown in Table 2 were used instead of the metal particles (A)-1 (87 parts by mass). The results are shown in Table 2.

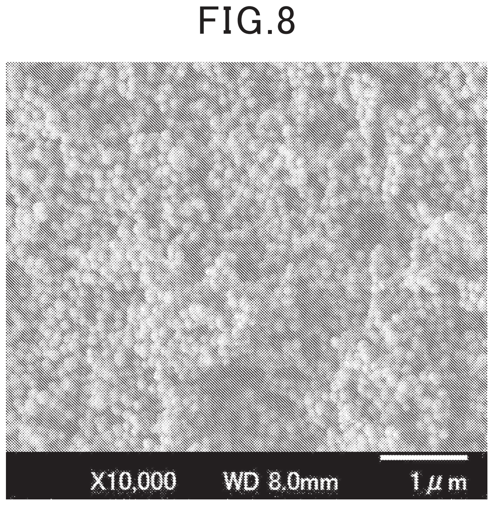

Fig. 8 shows the image data of the metal particles (B)-3 acquired by an SEM at a magnification of 10,000x.

[Comparative Example 4]

A joining material was produced and a joined body was produced and evaluated in the same manner as in Example 1, except that metal particles (B)-4 ("N300" manufactured by Tokusen Kogyo Co., Ltd., plate-shaped silver particles) (87 parts by mass) shown in Table 2 were used instead of the metal particles (A)-1 (87 parts by mass). The results are shown in Table 2.

[Table 1]

| | | | Example 1 | Example 2 | Example 3 | Comparative example 1 |
|---|---|---|---|---|---|---|
| Components contained in joining material (content (mass%)) | | Metal particle | (A)-1 (87) | (A)-2 (87) | (A)-3 (87) | (B)-1 (87) |
| | | Solvent | Texanol (13) | Texanol (13) | Texanol (13) | Texanol (13) |
| Properties of metal particles | | Metal species | Silver | Silver | Silver | Silver |
| | | Shape | Substantially spherical | Substantially spherical | Substantially spherical | Substantially spherical |
| | | **Dmin** ($\mu$m) | 0.19 | 0.11 | 0.13 | 0.08 |
| | | D10 ($\mu$m) | 0.29 | 0.21 | 0.32 | 0.17 |
| | | D50 ($\mu$m) | 0.42 | 0.32 | 0.48 | 0.32 |
| | | D90 ($\mu$m) | 0.70 | 0.52 | 0.75 | 0.59 |
| | | Dmax ($\mu$m) | 1.95 | 1.64 | 1.95 | 1.95 |
| | | Specific surface area (m$^2$/g) | 1.2 | 1.5 | 0.95 | 1.7 |
| Drying condition | | Temperature (°C) | 145 | 145 | 145 | 145 |
| Firing condition | | Temperature (°C) | 250 | 250 | 250 | 250 |
| | | Pressure (MPa) | 15 | 15 | 15 | 15 |
| Evaluation results | | Effect of suppressing cracking in dried joining material | A | A | A | B |
| | | Effect of suppressing generation of pores in joining portion (porosity (%)) | A (3.2) | A (2.6) | A (3.2) | A (2.9) |

[Table 2]

| | | Comparative example 2 | Comparative example 3 | Comparative example 4 |
|---|---|---|---|---|
| Components contained in joining material (content (mass%)) | Metal particle | (B)-2 (87) | (B)-3 (87) | (B)-4 (87) |
| | Solvent | Texanol (13) | Texanol (13) | Texanol (13) |
| Properties of metal particles | Metal species | Silver | Silver | Silver |
| | Shape | Substantially spherical | Substantially spherical | Plate-shaped |
| | Dmin ($\mu$m) | 0.08 | 0.06 | 0.12 |
| | D10 ($\mu$m) | 0.21 | 0.11 | 0.23 |
| | D50 ($\mu$m) | 0.46 | 0.20 | 0.38 |
| | D90 ($\mu$m) | 0.82 | 0.33 | 0.63 |
| | Dmax ($\mu$m) | 2.75 | 0.69 | 1.73 |
| | Specific surface area (m$^2$/g) | 1.3 | 3.2 | 2.5 |
| Drying condition | Temperature (°C) | 145 | 145 | 145 |
| Firing condition | Temperature (°C) | 250 | 250 | 250 |
| | Pressure (MPa) | 15 | 15 | 15 |
| Evaluation results | Effect of suppressing cracking in dried joining material | A | C | C |
| | Effect of suppressing generation of pores in joining portion (porosity (%)) | B (6.6) | - | - |

As seen from the above results, in Examples 1 to 3, cracking in the dried joining material was suppressed even when the dried joining material was thick. Further, a joining portion with few pores was formed even when the dried joining material was fired while being pressed at a low pressure of 15 MPa. In Examples 1 to 3, the porosity of the joining portion was 3.2% or less (2.6% to 3.2%).

In Examples 1 to 3, the joining material contained only the metal particles (A) as the metal particles, D50 of the metal particles (A) was 0.32 $\mu$m to 0.48 $\mu$m, Dmin of the metal particles (A) was 0.11 $\mu$m or greater (0.11 $\mu$m to 0.19 $\mu$m), and the joining material contained no resin component.

Further, in Examples 1 to 3, D90 of the metal particles (A) was 0.75 $\mu$m or less (0.52 $\mu$m to 0.75 $\mu$m), D10 of the metal particles (A) was 0.21 $\mu$m or greater (0.21 $\mu$m to 0.32 $\mu$m), and the specific surface area of the metal particles (A) was 0.95 m$^2$/g to 1.5 m$^2$/g, and therefore, it was presumed that the joining material had more preferred properties.

On the other hand, in Comparative Example 1, cracking in the dried joining material was not suppressed. In Comparative example 1, the joining material contained the metal particles (B) instead of the metal particles (A). Dmin of the metal particles (B) was 0.08 $\mu$m.

In Comparative Example 2, the joining portion had many pores, and the porosity was 6.6%. In Comparative Example 2, the joining material contained the metal particles (B) instead of the metal particles (A). In addition to the Dmin of the metal particles (B) being 0.08 $\mu$m, D90 of the metal particles (B) was 0.82 $\mu$m, which was large.

In Comparative Example 3, significant cracking occurred in the dried joining material, and the silver-plated copper plate was seen through the cracks, making it impossible to produce a joined body. In Comparative Example 3, the joining material contained the metal particles (B) instead of the metal particles (A). D50 of the metal particles (B) was 0.20 $\mu$m, which was too small, and Dmin of the metal particles (B) was 0.06 $\mu$m, which was too small.

In Comparative Example 4, as with the case of Comparative Example 3, significant cracking occurred in the dried joining material, and the silver-plated copper plate was seen through the cracks, making it impossible to produce a joined body. In Comparative Example 4, the joining material contained the metal particles (B) instead of the metal particles (A). The metal particles (B) had a plate shape.

[Industrial Applicability]

The present invention can be used for production of conductive joined bodies, in particular, semiconductor devices.

[Reference Signs List]

1 ... Joined body,

11 ... First component,

11a ... First surface,

12 ... Second component,

12a ... Second surface,

13 ... Joined portion,

130 ... Joining material,

130' ... Dried joining material,

101, 102 ... Laminate

## Claims

1. A joining material for joining conductive components together, the joining material comprising:

    metal particles including substantially spherical metal particles (A); and
    a solvent for dispersing the metal particles, wherein
    the metal particles (A) have a particle size D50 at a cumulative volume of 50% of 0.3 $\mu$m to 0.5 $\mu$m and a minimum particle size Dmin of greater than 0.08 $\mu$m, as measured by laser diffraction/scattering particle size distribution measurement.

2. The joining material according to claim 1, wherein

    the metal particles include metal particles (B) different from the metal particles (A), and
    the metal particles (B) have a minimum particle size Dmin of greater than 0.08 $\mu$m, as measured by laser diffraction/scattering particle size distribution measurement.

3. The joining material according to claim 1 or 2, further comprising

    a resin component which is a curable resin, a non-curable resin or a thermoplastic resin in the solvent, wherein a ratio of a content of the resin component to a content of the metal particles in the joining material is less than 0.01 mass%.

4. The joining material according to claim 1 or 2, wherein
    the joining material does not contain a resin component which is a curable resin, a non-curable resin or a thermoplastic resin in the solvent.

5. The joining material according to claim 1 or 2, wherein
    the metal particles (A) have a particle size D90 at a cumulative volume of 90% of less than 0.8 $\mu$m, as measured by laser diffraction/scattering particle size distribution measurement.

6. The joining material according to claim 2, wherein
    both the metal particles (A) and the metal particles (B) are silver particles.

7. The joining material according to claim 1 or 2, wherein
the metal particles (A) have a specific surface area in a range of 0.95 m$^2$/g to 1.5 m$^2$/g.

8. A method of producing a joined body in which a conductive first component and a conductive second component are bonded via a conductive joining portion, the method comprising:

attaching the joining material according to claim 1 or 2 to a first surface of the first component or a second surface of the second component;
drying the attached joining material to form a dried joining material;
laminating the first component and the second component with the dried joining material therebetween to produce a laminate; and
firing the dried joining material in the laminate at a temperature higher than a temperature at which the joining material has been dried to thereby form the joining portion from the dried joining material.

9. The method of producing a joined body according to claim 8, wherein
the joining portion has a thickness of 100 μm or greater.

FIG.1

FIG.2A

FIG.2B

FIG.2C

FIG.2D

HEATING (DRYING TEMPERATURE < FIRING TEMPERATURE)

FIG.2E

FIG.3A

FIG.3B

FIG.3C

FIG.3D

HEATING (DRYING TEMPERATURE < FIRING TEMPERATURE)

FIG.3E

## FIG.4

X10,000     WD 8.0mm     1 μm

## FIG.5

X10,000     WD 8.0mm     1 μm

## FIG.6

X10,000　　WD 8.0mm　　1 μ m

## FIG.7

X10,000　　WD 8.0mm　　1 μ m

# FIG.8

## INTERNATIONAL SEARCH REPORT

| International application No. |
| --- |
| **PCT/JP2024/015619** |

| A. CLASSIFICATION OF SUBJECT MATTER |
| --- |
| ***B22F 1/052***(2022.01)i; ***B22F 1/00***(2022.01)i; ***B22F 1/06***(2022.01)i; ***B22F 1/054***(2022.01)i; ***B22F 1/107***(2022.01)i; ***B22F 3/14***(2006.01)i; ***B22F 7/04***(2006.01)i; ***H01B 1/22***(2006.01)i <br> FI:   B22F1/052; B22F1/00 K; B22F1/054; B22F1/06; B22F1/107; B22F3/14 A; B22F7/04 A; H01B1/22 A |
| According to International Patent Classification (IPC) or to both national classification and IPC |

| B. FIELDS SEARCHED |
| --- |
| Minimum documentation searched (classification system followed by classification symbols) |
| B22F1/052; B22F1/00; B22F1/06; B22F1/054; B22F1/107; B22F3/14; B22F7/04; H01B1/22 |
| Documentation searched other than minimum documentation to the extent that such documents are included in the fields searched |
| Published examined utility model applications of Japan 1922-1996 <br> Published unexamined utility model applications of Japan 1971-2024 <br> Registered utility model specifications of Japan 1996-2024 <br> Published registered utility model applications of Japan 1994-2024 |
| Electronic data base consulted during the international search (name of data base and, where practicable, search terms used) |

| C. DOCUMENTS CONSIDERED TO BE RELEVANT |
| --- |

| Category* | Citation of document, with indication, where appropriate, of the relevant passages | Relevant to claim No. |
| --- | --- | --- |
| A | WO 2019/163568 A1 (LINTEC CORPORATION) 29 August 2019 (2019-08-29) | 1-9 |
| A | JP 2022-83624 A (SUMITOMO BAKELITE CO., LTD.) 06 June 2022 (2022-06-06) | 1-9 |
| A | JP 2011-080147 A (DOWA ELECTRONICS MATERIALS CO., LTD.) 21 April 2011 (2011-04-21) | 1-9 |
| A | US 2020/0171578 A1 (NATIONAL CHENG KUNG UNIVERSITY) 04 June 2020 (2020-06-04) | 1-9 |

☐ Further documents are listed in the continuation of Box C.      ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **15 May 2024** | **28 May 2024** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

**INTERNATIONAL SEARCH REPORT**
Information on patent family members

International application No.

**PCT/JP2024/015619**

| Patent document cited in search report | | | Publication date (day/month/year) | Patent family member(s) | | | Publication date (day/month/year) |
|---|---|---|---|---|---|---|---|
| WO | 2019/163568 | A1 | 29 August 2019 | US | 2021/0078080 | A1 | |
| | | | | EP | 3756789 | A1 | |
| | | | | KR | 10-2020-0106200 | A | |
| | | | | CN | 111741823 | A | |
| | | | | TW | 201938293 | A | |
| JP | 2022-83624 | A | 06 June 2022 | (Family: none) | | | |
| JP | 2011-080147 | A | 21 April 2011 | (Family: none) | | | |
| US | 2020/0171578 | A1 | 04 June 2020 | (Family: none) | | | |

Form PCT/ISA/210 (patent family annex) (July 2022)

**REFERENCES CITED IN THE DESCRIPTION**

**Patent documents cited in the description**

- JP 2023071339 A